# FASCICULE DE BREVET EUROPEEN

(11) **EP 1 283 775 B1**
(45) Date de publication et mention de la délivrance du brevet: **02.01.2004**
(21) Numéro de dépôt: 01936503.0
(22) Date de dépôt: 14.05.2001
(51) Int. Cl.: B29C 67/00, B29C 39/24, B29C 31/04, B29C 33/00, B29C 33/02

(54) **DISPOSITIF POUR LA REALISATION DE PLAQUES DESTINEES A UN PROCEDE DE PROTOTYPAGE RAPIDE, PROCEDE D'USINAGE ET D'ASSEMBLAGE DESDITES PLAQUES ET PIECES PROTOTYPES AINSI OBTENUES**
VERFAHREN ZUR HERSTELLUNG VON PLATTEN FÜR EIN PROTOTYPSCHNELLVERFAHREN, NACHBEARBEITUNG UND ZUSAMMENSETZUNG DIESER PLATTEN SOWIE ERZEUGTE TEILE
DEVICE FOR PRODUCING PLATES DESIGNED FOR A FAST PROTOTYPING PROCESS, METHOD FOR MACHINING AND ASSEMBLING SAID PLATES AND RESULTING PLATES AND PROTOTYPE WORKPIECES

(30) Priorité: 15.05.2000 FR 0006181
(43) Date de publication de la demande: 19.02.2003
(73) Titulaire: Centre d'Ingénierie de Recherche et de Transfert de l' Esstin, 88100 Saint-Dié (FR)
(72) Inventeur: BARLIER, Claude, F-88100 Coinches (FR); WADSWORTH, Alain, F-88520 Ban De Laveline (FR)
(74) Mandataire: Poupon, Michel
(86) Numéro de dépôt international: PCT/FR2001/001445
(87) Numéro de publication internationale: WO 2001/087574

(56) Documents cités:
- EP-A- 0 655 668
- WO-A-91/12120
- DE-A- 3 711 470
- FR-A- 2 673 302
- FR-A- 2 750 064
- PATENT ABSTRACTS OF JAPAN vol. 016, no. 370 (M-1292), 10 août 1992 (1992-08-10) & JP 04 118221 A (FUJITSU LTD), 20 avril 1992 (1992-04-20)
- PATENT ABSTRACTS OF JAPAN vol. 1995, no. 11, 26 décembre 1995 (1995-12-26) & JP 07 214274 A (U MOLD:KK), 15 août 1995 (1995-08-15)

## Description

La présente invention a pour objet un dispositif pour la réalisation de plaques en métal, en matière plastique ou composite, métallo-plastique, qu'elles soient non limitativement de type thermofusibles, thermoplastiques, ou thermodurcissables destinées plus particulièrement à être usinées par un outil d'usinage dans le cadre d'un procédé de prototypage rapide.

L'invention a également pour objet un procédé d'usinage d'une plaque, ainsi qu'une pièce prototype.

De manière générale, on fera référence dans le contexte de la présente demande, au procédé de prototypage rapide connu sous le nom de STRATOCONCEPTION (marque déposée) faisant l'objet en particulier du brevet européen EP 0585 502-B1 dont est titulaire le déposant de la présente demande.

Il sera également fait référence aux demandes de brevets français non publiées 98 14687 et 98 14688 dont est également titulaire le déposant de la présente demande.

On rappellera que le procédé général de STRATOCONCEPTION consiste en un procédé de réalisation de pièces mécaniques et objets en particulier de prototypes à partir d'une conception assistée par ordinateur spécifique du type comportant les phases successives de :
- décomposition virtuelle en strates élémentaires ; mise en panoplie ;
- fabrication des pièces en couches ou strates élémentaires ;
- reconstitution de l'ensemble des couches ;
- assemblage des couches
lesdites strates étant issues d'une décomposition préalable de la pièce selon des plans et un ou des pas déterminés.

Le principe de base consiste à décomposer le volume à reproduire sous forme de prototype en une multitudes de strates, réalisées par usinage, par exemple micro-fraisage rapide d'un matériau en plaque, ledit matériau pouvant être en bois, en composite, en matière plastique ou métallique.

Le choix du matériau dans le groupe ci-dessus implique nécessairement une perte importante de matière, non rédhibitoire en elle même sur la conduite du procédé, mais néanmoins préjudiciable quant à l'économie de celui-ci, les copeaux, chutes de matériau et résidu de fraisage produits étant inutilisables.

Le besoin se fait donc sentir d'un procédé d'usinage permettant de mettre en oeuvre un matériau à usiner dont les résidus d'usinage peuvent être recyclés, ainsi éventuellement que les pièces usinées elles-mêmes lorsqu'elles sont de qualité non satisfaisante ou ne sont plus utiles.

Conformément à l'invention ce résultat est obtenu avec un dispositif tel que décrit dans la revendication 1.

Le matériau utilisé pour la mise en oeuvre du dispositif ci-dessus pourra se présenter sous la forme d'un liquide, de granulés ou d'éléments solides.

Le matériau pourra être du type thermofusible et pourra être thermoplastique ou thermodurcissable.

Dans le cas de l'utilisation d'un matériau thermoplastique, le processus de chauffage/refroidissement sera réversible.

Dans le cas de l'utilisation d'un matériau sous forme de granulés, le cycle comportera une phase de plastification par thermocompression ou injection.

On comprendra que l'invention trouve son application pour tout matériau pouvant, dans une fourchette de température raisonnable, passer de l'état liquide à l'état solide, éventuellement de manière réversible.

Selon l'invention, l'usinage de la plaque constituant une strate ou un ensemble de strates en panoplie sera opéré directement dans le moule comme décrit dans la revendication 4, les copeaux ainsi générés étant récupérés et éventuellement recyclés, la pièce étant maintenue dans le moule à froid et libérée de celui-ci par léger réchauffement de sa partie inférieure, juste suffisant pour décoller la plaque du fond de moule.

Par rapport aux procédés et dispositifs de l'art antérieur, le dispositif proposé permet de grandes facilités d'approvisionnement en matériau.

D'autre part, il permet d'optimiser l'automatisation du processus général de prototypage. Une pièce prototype selon l'invention est décrite dans la revendication 7.

On comprendra mieux l'invention à l'aide de la description ci-après en référence aux dessins annexés dans lesquels :
- la figure 1 est une vue schématique en coupe partielle d'un dispositif conforme à l'invention, selon son principe de base,
- la figure 2 est. une variante du dispositif de la figure 1.

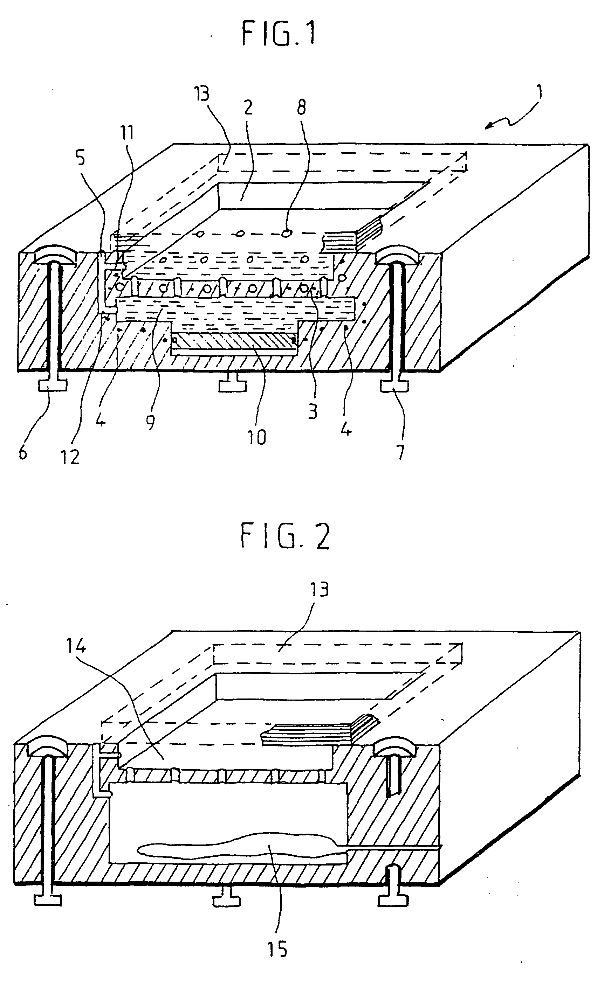

On se référera tout d'abord à la figure 1.

Le dispositif (1) selon l'invention comporte essentiellement :
- une cuve (2)
- une plaque de fond (3)
- un circuit de chauffage (4)
- un circuit de circulation des fluides (5)

Le dispositif (1) est fixé par exemple par des écrous (6,7) sur une surface plane, par exemple.surface de table de machine-outil.

Le fond de cuve comporte une plaque (3) ajourée traversée longitudinalement par des résistances chauffantes (4) et un circuit de réchauffement (5).

Des ajourages (8) sont ménagés transversalement dans la plaque et mettent en communication la face libre de la cuve avec un réservoir inférieur de fluide (9).

Le mouvement du fluide est commandé par un piston (10) fonctionnant à air comprimé ou par tout autre système mécanique fonctionnellement équivalent et compatible avec les conditions d'utilisation.

Une plaque supérieure (13) escamotable pourra assurer la fermeture temporaire du moule pendant l'injection du matériau ou la phase de durcissage.

Selon une variante de mise en oeuvre, on pourra s'affranchir de l'utilisation de la plaque (13) de fermeture du moule. Dans ce cas, la matière viendra dépasser le plan supérieur du moule. La mise à niveau sera effectuée par arasage, par exemple en mettant en oeuvre les moyens de fraisage déjà en place sur la station de prototypage rapide, ou tout autre procédé de raclage.

Le trop plein de liquide sera évacué par des évents (11,12) placés par exemple en partie supérieure du moule.

Selon des variantes possibles de mise en oeuvre :
- les canalisations de refroidissement serviront également de réseau de circulation d'un fluide de chauffage,
- les canaux d'alimentation pourront être situés uniquement sur les parties latérales du moule pour faciliter la rupture des canaux lors de l'extraction de la strate.

Le principe de base est la réalisation de plaques éjectées, éventuellement par un système adéquat de piston, après refroidissement.

De multiples variantes de mise en oeuvre peuvent être prévues sans sortir du cadre de l'invention.

Ainsi, comme représenté à la figure 2, la plaque supérieure escamotable (13) permet l'injection d'une plaque ou pièce (14). L'éjection est gérée par un moyen pneumatique et/ou mécanique (15) qui éjectera la pièce (14) après léger réchauffement. La cuve ou empreinte proprement dite du moule sera aménagée pour faciliter le démoulage et l'extraction de la pièce (14).

On pourra également se servir de la matière plastique à nouveau liquéfiée dans le réservoir pour éjecter la plaque (14) restée solide.

## Revendications

1. Dispositif pour la réalisation de plaques en métal en matière plastique ou composite, métallo-plastique, qu'elles soient non limitativement de type thermofusibles, thermoplastiques ou thermodurcissables destinées plus particulièrement à être usinées par un outil d'usinage dans le cadre d'un procédé de prototypage rapide consistant en un moule à plaques intégré à la machine de prototypage, ledit moule étant apte à recevoir un matériau épousant la forme du moule après avoir été soumis à un cycle réchauffement/refroidissement par un moyen de chauffage/refroidissement intégré au corps du moule, ledit moule comportant essentiellement :
- une cuve (2)
- une plaque de fond de cuve (3)
- un circuit de chauffage (4)
- un circuit de circulation des fluides (5),
la plaque de fond de cuve (3) étant ajourée et traversée longitudinalement par des résistances chauffantes (4) et un circuit de réchauffement (5), des ajourages (8) étant ménagés transversalement dans la plaque (3) et mettant en communication la face libre de la cuve avec un réservoir inférieur de fluide (9).

2. Dispositif selon la revendication 1, **caractérisé en ce que** le mouvement du fluide est commandé par un piston (10) ou un moyen pneumatique (15).

3. Dispositif selon l'une quelconque des revendications 1 à 2, **caractérisé en ce qu'**il comporte une plaque supérieure escamotable (13) assurant la fermeture temporaire du moule.

4. Procédé pour l'usinage d'une plaque constituant une strate ou dans un ensemble de strates en panoplie dans le cadre d'un procédé de prototypage rapide par décomposition en strates assistée par ordinateur, dans lequel l'usinage de la plaque est opéré directement dans un dispositif selon l'une quelconque des revendications 1 à 3 après moulage de la plaque.

5. Procédé selon la revendication 4, **caractérisé en ce que** le matériau utilisé pour la réalisation de la strate est un matériau métallique, plastique ou composite métallo-plastique pouvant passer d'une phase liquide à une phase solide.

6. Procédé selon la revendication 4, **caractérisé en ce que** le matériau utilisé pour la réalisation de la strate est un matériau thermodurcissable ou thermoplastique.

7. Pièce prototype obtenue par la mise en oeuvre du procédé selon l'une quelconque des revendications 4 à 6.

## Patentansprüche

1. Vorrichtung zur Herstellung von Platten aus Metall, Kunststoff oder Metall-Kunststoff-Verbundstoff, die - nicht einschränkend - wärmeschmelzbar, thermoplastisch oder wärmehärtbar sind und die insbesondere für die Verwendung in einem bei einem Prototypschnellverfahren eingesetzten Werkzeug bestimmt sind, das aus einer Plattenform besteht, die in einer Prototypmaschine integriert ist, wobei die genannte Form sich dazu eignet, einen Werkstoff aufzunehmen, der die Gestalt der Form annimmt, nachdem er einem Wiedererwärmungs-/Abkühlungszyklus durch ein Wiedererwärmungs-/Abkühlungsmittel unterworfen wurde, das im Körper der Form integriert ist und wobei die Form im Wesentlichen umfasst:
- eine Wanne (2),
- eine Grundplatte (3) der Wanne
- einen Heizkreis (4)
- einen Kreisumlauf von Flüssigkeiten (5),
und wobei die Grundplatte (3) der Wanne mit kleinen Öffnungen versehen ist und durch die Grundplatte (3) in der Längsrichtung Heizwiderstände (4) sowie ein Wiedererwärmungskreis (5) hindurchgeführt werden, während die kleinen Öffnungen (8) in der Platte (3) transversal angeordnet sind und die freie Stirnseite der Wanne mit einem darunter ausgebildeten Flüssigkeitsbehälter (9) verbinden.

2. Vorrichtung nach Anspruch 1, **dadurch gekennzeichnet, dass** die Bewegung der Flüssigkeit durch einen Kolben (10) oder ein pneumatisches Mittel (15) gesteuert wird.

3. Vorrichtung nach Anspruch 1 oder 2, **dadurch gekennzeichnet, dass** sie eine obere abnehmbare Platte (13) aufweist, die ein vorübergehendes Schließen der Form sicherstellt.

4. Verfahren zur Bearbeitung einer Platte, die eine Lage bildet, oder einer Platte in einer Gruppe von mehreren Lagen bei einem Prototypschnellverfahren durch von einem Rechner unterstützte Zerlegung in einzelne Lagen, bei dem die Bearbeitung der Platte unmittelbar nach dem Ausformen der Platte in einer Vorrichtung nach einem der Ansprüche 1 bis 3 durchgeführt wird.

5. Verfahren nach Anspruch 4, **dadurch gekennzeichnet, dass** der zur Herstellung der Lage benutzte Werkstoff ein metallischer Werkstoff, ein Kunststoff oder ein Metall-Kunststoff-Verbundstoff ist, der von einer flüssigen Phase in eine feste Phase übergehen kann.

6. Verfahren nach Anspruch 4, **dadurch gekennzeichnet, dass** der zur Herstellung der Lage benutzte Werkstoff ein wärmehärtbarer oder thermoplastischer Werkstoff ist.

7. Prototypteil, das durch die Durchführung des Verfahrens nach einem der Ansprüche 4 bis 6 erhalten wird.

## Claims

1. Apparatus for producing plates in metal, plastics material or metal-plastic composite, being non-limitingly of the heat-fusible, thermoplastics or heat-hardenable type intended, more especially, to be machined by a machine tool as part of a rapid prototyping method, said apparatus comprising a plate mould incorporated in the prototyping machine, said mould being capable of accommodating a material which takes on the form of the mould after being subjected to a heating/cooling cycle by a heating/cooling means incorporated in the body of the mould, said mould comprising substantially:
- a tank (2);
- a tank base plate (3);
- a heating circuit (4); and
- a fluid-circulating circuit (5);
the tank base plate (3) being perforated and traversed longitudinally by heating resistors (4) and a heating circuit (5), perforations (8) being provided transversely in the plate (3) and connecting the free face of the tank with a lower fluid reservoir (9).

2. Apparatus according to claim 1, **characterised in that** the movement of the fluid is controlled by a piston (10) or a pneumatic means (15).

3. Apparatus according to any of claims 1 to 2, **characterised in that** it comprises an upper retractable plate (13) which ensures the temporary closure of the mould.

4. Method of machining a plate making up a stratum or in an assembly of a full set of strata as part of a method of rapid prototyping by decomposing into strata by computer, in which the machining of the plate is carried out directly in an apparatus according to any of claims 1 to 3 after the moulding of the plate.

5. Method according to claim 4, **characterised in that** the material used for producing the stratum is a metallic, plastics or metal-plastics composite material which is able to pass from a liquid phase to a solid phase.

6. Method according to claim 4, **characterised in that** the material used for producing the stratum is a heat-hardenable or thermoplastics material.

7. Prototype part obtained by carrying out the method according to any of claims 4 to 6.
